# EUROPÄISCHE PATENTANMELDUNG

(11) **EP 1 011 284 A2**
(43) Veröffentlichungstag der Anmeldung: **21.06.2000**
(21) Anmeldenummer: 99117813.8
(22) Anmeldetag: 09.09.1999
(51) Int. Cl.: H04Q 7/38

(54) **Absetzung eines Notfunkrufs mit Positionsbestimmung**

(30) Priorität: 18.12.1998 DE 19858711
(71) Anmelder: Oztrak Group Pty Ltd., Victoria (AU)
(72) Erfinder: Swift, Tarquin, 80469 München (DE)
(74) Vertreter: Bohnenberger, Johannes, Dr.

(57) **Zusammenfassung**

Die Erfindung betrifft ein Verfahren und eine Vorrichtung zum Absetzen eines Funkrufs, insbesondere zum Absetzen eines Notrufs oder einer Informationsanforderung. Die Funkrufvorrichtung (TSK) ist insbesondere in einem Kraftfahrzeug angeordnet. Zur Bestimmung der örtlichen Position der Funkrufvorrichtung bzw. einer mit dieser verbundenen Vorrichtung, insbesondere des Kraftfahrzeugs, werden externe Positionssignale ausgewertet. Wird ein Funkruf ausgelöst, übermittelt die Funkrufvorrichtung (TSK) ein Funkrufsignal an eine vorrichtungsexterne Funkruf-Sendeeinheit, in dem unter anderem Informationen über die örtliche Position enthalten sind. Die Funkruf-Sendeeinheit setzt das Funkrufsignal in einen Funkruf um. Um mit Funkruf-Sendeeinheiten unterschiedlicher Art zusammenarbeiten zu können, wird der Funkrufvorrichtung (TSK) ein Erkennungssignal zugeführt, und das Funkrufsignal entsprechend aufbereitet.

## Beschreibung

Die Erfindung betrifft eine Vorrichtung und ein Verfahren zum Absetzen eines Funkrufs, insbesondere zum Absetzen eines Notrufs und/oder einer Informationsanforderung.

Aus unterschiedlichen Gründen werden Notrufzentralen unterhalten, beispielsweise um auf einen eingehenden Notruf hin die Polizei oder die Feuerwehr zu alarmieren. Diese Notrufzentralen sind über öffentliche Kommunikationsnetze oder über spezielle Notrufsysteme erreichbar. In öffentlichen Kommunikationsnetzen existieren hierfür allgemein bekannte Notrufnummern. An Straßen oder anderen Orten sind Notruf-Sende-Einheiten, insbesondere Notrufsäulen, aufgestellt, die beispielsweise eine direkte Verbindung zu einer Notrufzentrale des Straßenbetreibers haben. An Notrufsäulen befinden sich Klappen, bei deren Öffnen automatisch die Verbindung zu der Notrufzentrale hergestellt wird. Anschließend gibt der Nutzer der Notrufsäule die örtliche Position und den Grund für den Notruf an die Notrufzentrale durch. Es wird dann beispielsweise das Personal eines mobilen Pannenfahrzeugs benachrichtigt, um Hilfe zu einem liegengebliebenen Kraftfahrzeug zu schicken.

Weiterhin werden Servicezentralen unterhalten, bei denen Informationen unterschiedlichster Art, beispielsweise Informationen über die Verkehrslage im Straßenverkehr abgerufen oder angefordert werden können.

Bekannt sind mobile Funkruf-Sendeeinheiten zum Senden eines Funkrufs an Empfänger des Funkrufs. Es sind beispielsweise Mobiltelefone unterschiedlicher Art und von einer Vielzahl von verschiedenen Herstellern in großer Stückzahl in Verwendung. Einige der Funkruf-Sendeeinheiten haben Schnittstellen, über die sie mit anderen Geräten, wie einem Personal Computer, einem Faxgerät oder dergleichen in Verbindung treten können. Die Verbindung kann über eine Festleitungsverbindung (z. B. ein Kabel) oder auf drahtlose Weise hergestellt werden. Neuere Mobiltelefone sind hierzu mit Sende- und/oder Empfangseinheiten ausgestattet, die durch elektromagnetische Wellen im Infrarotbereich mit den anderen Geräten kommunizieren. Von einem Personal Computer aus wird das Mobiltelefon als portables Modem verwendet, um eine Verbindung mit einem Kommunikationsnetz herzustellen. Für die Herstellung der Verbindung zu den anderen Geräten über Festleitung sind je nach Typ des Mobiltelefons oder eines Modems unterschiedliche Steckverbindungen an den Mobiltelefonen bzw. Funkruf-Sendeeinheiten am Markt vorhanden. Weiterhin verwenden die verschiedenen Hersteller der Mobiltelefone oder Modems unterschiedliche Protokolle für die Datenübertragung zu den anderen Geräten oder von diesen.

Der vorliegenden Erfindung liegt die Aufgabe zugrunde, eine Funkrufvorrichtung und ein Verfahren zum Absetzen eines Funkrufs anzugeben, so daß im mobilen Einsatz ein Funkruf absetzbar ist. Dabei soll auf verschiedene, derzeit oder zukünftig auf dem Markt erhältliche Funkruf-Sendeeinheiten zum Senden des Funkrufs zurückgegriffen werden können.

Die Aufgabe wird durch eine Funkrufvorrichtung mit den Merkmalen des Anspruchs 1 und durch ein Verfahren mit den Merkmalen des Anspruchs 10 gelöst. Weiterbildungen sind Gegenstand der jeweils abhängigen Ansprüche.

Die erfindungsgemäße Funkrufvorrichtung weist eine Positionsbestimmungseinheit zur Bestimmung der örtlichen Position der Funkrufvorrichtung bzw. der Position einer mit dieser verbundenen Vorrichtung, insbesondere eines Kraftfahrzeugs, auf. Weiterhin ist ein Auslösesignalanschluß zur Zuführung eines Auslösesignals vorhanden, durch dessen Eintreffen und/oder bei dessen Ausbleiben das Absetzen des Funkrufs ausgelöst wird. Das Betätigungsmittel, beispielsweise ein elektrischer Taster, kann insbesondere auch in die Funkrufvorrichtung integriert sein. In diesem Fall bildet die Berührfläche des Tasters den Auslösesignalanschluß. Vorzugsweise besteht jedoch das Auslösesignal in einem extern erzeugten elektrischen Signal. Die Funkrufvorrichtung weist weiterhin einen Erkennungsanschluß zur Zuführung eines Erkennungssignals auf, aus dem der Typ und/oder die Betriebsart eine an die Funkrufvorrichtung anschließbare Funkruf-Sendeeinheit erkennbar ist. Ein Funkrufausgang zum Ausgeben eines Funkrufsignals an die Funkruf-Sendeeinheit ist vorhanden, so daß die Funkruf-Sendeeinheit beim Empfang des Funkrufsignals einen entsprechenden Funkruf sendet. Schließlich ist eine Erkennungseinheit vorgesehen, die entsprechend dem über den Erkennungsanschluß zugeführten Erkennungssignal eine Anpassung des Funkrufsignals an den Typ der Funkruf-Sendeeinheit und/oder an dessen Betriebsart steuert.

Gemäß einem Kerngedanken der Erfindung ist also die Funkrufvorrichtung mit unterschiedlichen Typen von an die Funkrufvorrichtung anschließbaren Funkruf-Sendeeinheiten kombinierbar. Es findet eine vorzugsweise automatische Erkennung des Typs und/oder dessen Betriebsart statt, so daß das richtige Funkrufsignal an die Funkruf-Sendeeinheit ausgebbar ist. Von Vorteil ist, daß die unterschiedlichen Protokolle der verschiedenen Hersteller bei der Übermittlung des Funkrufsignals an die Funkruf-Sendeeinheit einhaltbar sind, je nach Typ und/oder Betriebsart.

Vorzugsweise sind der Erkennungsanschluß und der Funkrufausgang durch eine gemeinsame gerätetechnische Anschlußeinheit gebildet, insbesondere durch einen mehrpoligen Steckverbinder. Der Montageaufwand bei einem Wechsel auf einen anderen Typ und/oder eine andere Betriebsart der Funkruf-Sendeeinheit ist somit gering.

Bei einer Weiterbildung weist die Funkrufvorrichtung eine Abfrageeinheit zum Abfragen einer vorrichtungsexternen Information auf, die in Form des Erkennungssignals der Erkennungseinheit zugeführt wird. Die Funkrufvorrichtung fragt dann beispielsweise unmittelbar nach ihrer Aktivierung und/oder in regelmäßigen Zeitabständen die vorrichtungsexterne Information ab. Somit ist gewährleistet, daß die Funkrufvorrichtung immer das richtige Funkrufsignal an die Funkruf-Sendeeinheit ausgibt.

Besonders bevorzugt wird eine Weiterbildung, bei der ein in die Funkrufvorrichtung einsteckbarer Steckverbinder eine Codierung aufweist, aus der der Typ und/oder die Betriebsart der Funkruf-Sendeeinheit erkennbar ist. Die Codierung kann insbesondere in einer elektrischen Verbindung von verschiedenen Polen eines mehrpoligen Steckverbinders bestehen. Es ist aber auch möglich, einen nicht flüchtigen Datenspeicher in den Steckverbinder zu integrieren, der bei Anliegen einer elektrischen Spannung das Erkennungssignal abgibt, oder der von der Funkrufvorrichtung auslesbar ist. Der Steckverbinder ist vorzugsweise der Steckverbinder einer Anschlußleitung, über die die Verbindung zu der Funkruf-Sendeeinheit hergestellt wird.

Insbesondere wenn die Verbindung zwischen der Funkrufvorrichtung und der Funkruf-Sendeeinheit schnurlos, beispielsweise durch eine Infrarotschnittstelle, implementiert wird, wird vorzugsweise ein die Information über den Typ und/oder die Betriebsweise der Funkruf-Sendeeinheit enthaltender Gegenstand in eine Aufnahmeöffnung der Funkrufvorrichtung eingeführt. Im Bereich der Aufnahmeöffnung befindet sich dann der Erkennungsanschluß zur Zuführung des Erkennungssignals.

Vorzugsweise wird der Funkruf als SMS-Nachricht (Short Message Service) abgesetzt. Insbesondere kann auch eine Antwort des Empfängers als SMS-Nachricht und/oder als sonstige dem Protokoll des Herstellers entsprechende Datenmitteilung von der Funkrufvorrichtung verarbeitet oder an andere Geräte weitergeleitet werden, beispielsweise an ein Navigationssystem im Kraftfahrzeug oder an einen Bildschirm oder Display.

Bei einer Weiterbildung weist die Funkrufvorrichtung eine Freisprechsteuereinheit zum Steuern einer Freisprecheinrichtung auf, die mit der Funkruf-Sendeeinheit koppelbar ist. Üblich geworden sind Freisprecheinrichtungen in Verbindung mit Mobiltelefonen in Kraftfahrzeugen, um dem Fahrer des Kraftfahrzeugs das Führen eines Gesprächs über das Mobiltelefon während der Fahrt zu ermöglichen. Insbesondere um Herstellungskosten und Montagekosten zu sparen sowie um Platz zu sparen, weist die kombinierte
Funkrufvorrichtung/Freisprechsteuereinheit einen hohen Integrationsgrad auf. Vorzugsweise werden die Freisprechsteuereinheit, die Positionsbestimmungseinheit und die Erkennungseinheit von derselben Trägereinrichtung, insbesondere Platine, getragen. Die genannten Einheiten sind dann über an der Trägereinheit angebrachte Leitungsverbindungen elektrisch miteinander verbunden. Weiterhin können die Einheiten alle oder zum Teil in einen einzigen mikroelektronischen Chip integriert werden.

Bei Freisprechsteuereinheiten ist es üblich, daß die Freisprechsteuereinheit mit dem Mobiltelefon in Verbindung steht, um über ein Mikrofon empfangene Signale an das Mobiltelefon zu verarbeiten und weiterzugeben und um Lautsprechersignale von dem Mobiltelefon zu empfangen, zu verarbeiten und an eine Lautsprechereinrichtung weiterzuleiten. Vorzugsweise wird daher das ausgelöste Funkrufsignal, das beispielsweise von einer zentralen Rechnereinheit generiert wird, über die Freisprechsteuereinheit an die Funkruf-Sendeeinheit bzw. das Mobiltelefon übermittelt.

Vorzugsweise ist die Positionsbestimmungseinheit ausgebildet, GPS (Global Positioning System)-Signale über eine GPS-Antenneneinrichtung zu empfangen. Insbesondere dient die GPS-Antenneneinrichtung auch als Antenneneinrichtung zum Senden des Funkrufs und gegebenenfalls zum Empfangen von Funkrufsignalen, die in der Funkruf-Sendeeinheit bzw. dem Mobiltelefon verarbeitet werden.

Es wurde bereits vorgeschlagen, eine Bestimmung der örtlichen Position eines Mobiltelefons durch Auswertung von empfangenen Funkrufsignalen vorzunehmen, die von verschiedenen Basisstationen nach einem vorgegebenen oder bekannten Sendezeitmuster gesendet werden. Die Bestimmung der örtlichen Position kann daher bei der Funkrufvorrichtung auch anders als satellitengestützt erfolgen. Insbesondere kann sich die Funktion der Positionsbestimmungseinheit in der Funkrufvorrichtung dann darauf reduzieren, daß ein Positionssignal, das die örtliche Position bezeichnet, von der Funkruf-Sendeeinheit empfangen wird. Die eigentliche Bestimmung der örtlichen Position erfolgt dann geräteextern außerhalb der Funkrufvorrichtung. Wird darüberhinaus eine Funkruf-Sendeeinheit angeschlossen, die in der Lage ist, einem zu sendenden Funkruf Informationen über die örtliche Position beizugeben, wird vorzugsweise das Vorhandensein einer solchen Funkruf-Sendeeinheit von der Erkennungseinheit erkannt und das Funkrufsignal an die Funkruf-Sendeeinheit entsprechend angepaßt, so daß das Funkrufsignal nicht selbst die Information über die örtliche Position enthält.

Gemäß einer Weiterbildung ist an den Auslösesignalanschluß ein Bedienteil anschließbar, das es dem Nutzer ermöglicht, einen oder wahlweise mehrere verschiedene Funkrufe auszulösen. Ist in der Funkrufvorrichtung auch eine Freisprechsteuereinheit vorgesehen, so wird eine Ausgestaltung besonders bevorzugt, bei der es möglich ist, über das Bedienteil ein über die Freisprechsteuereinheit geführtes Gespräch zu starten und/oder zu beenden. Das Bedienteil kann beispielsweise abnehmbar in einer Halterung im Armaturenbereich eines Kraftfahrzeugs angebracht werden. Außer über eine Leitungsverbindung kann es alternativ auch über eine drahtlose Signalverbindung an die Funkrufvorrichtung angeschlossen sein.

Bei dem erfindungsgemäßen Verfahren zum Absetzen eines Funkrufs ist die Funkrufvorrichtung mit einer Funkruf-Sendeeinheit, insbesondere einem Mobiltelefon, verbindbar, um den Funkruf über die Funkruf-Sendeeinheit abzusetzen. Das von der Funkrufvorrichtung an die Funkruf-Sendeeinheit zu übermittelnde, das Senden des Funkrufs bewirkende Funkrufsignal ist abhängig von dem Typ der Funkruf-Sendeeinheit und/oder von dessen Betriebsart. Der Typ und/oder die Betriebsart wird aus einem Erkennungssignal erkannt, das der Funkrufvorrichtung zugeführt wird. Das Zuführen kann, wie bereits vorstehend beschrieben, durch eine Abfrage der Funkrufvorrichtung erfolgen.

Vorzugsweise wird die Aktivierung der Funkrufvorrichtung automatisch durch das signaltechnische Verbinden der Funkruf-Sendeeinheit mit der Funkrufvorrichtung ausgelöst. Unter Aktivierung wird verstanden, daß die Funkrufvorrichtung in einen Betriebszustand versetzt wird, in dem sie bereit ist, einen Funkruf abzusetzen bzw. ein Funkrufsignal an die Funkruf-Sendeeinheit auszugeben. Insbesondere wird die Funkrufvorrichtung bei der Aktivierung von einem Betriebszustand, in dem wesentliche Bestandteile spannungslos geschaltet sind, in einen Betriebszustand versetzt, in dem alle erforderlichen Bestandteile an eine Spannungsquelle angeschlossen sind, so daß zwangsläufig ein gewisses Maß an elektrischer Energie verbraucht wird. Im spannungslos geschalteten Zustand ist dagegen der elektrische Energieverbrauch minimal. Insbesondere wird die Aktivierung durch das Einsetzen eines Mobiltelefons in eine dafür vorgesehene Halterung bewirkt, die der Halterung und dem elektrischen Anschluß des Mobiltelefons dient.

Ist eine Freisprechsteuereinheit in der Funkrufvorrichtung vorgesehen, betrifft bei einer Weiterbildung die Aktivierung alternativ oder zusätzlich die Freisprechsteuereinheit.

Insbesondere weist der Funkruf einen vorher zwischen Funkrufvorrichtung und Empfänger vereinbarten Bedeutungsgehalt auf, der vorzugsweise abgekürzt oder kodiert übertragen wird.

Die Erfindung wird nun anhand von Ausführungsbeispielen näher beschrieben. Dabei wird Bezug auf die beigefügte Zeichnung genommen. Die Erfindung ist jedoch nicht auf diese Ausführungsbeispiele beschränkt. Die einzelnen Figuren der Zeichnung zeigen:
- Fig. 1: eine Ansicht eines Ausführungsbeispiels der erfindungsgemäßen Funkrufvorrichtung mit daran anschließbaren externen Bauteilen und Geräten in schematischer Darstellung und
- Fig. 2: das Zusammenwirken einzelner Bauteile der in Fig. 1 dargestellten Funkrufvorrichtung in schematischer Darstellung.

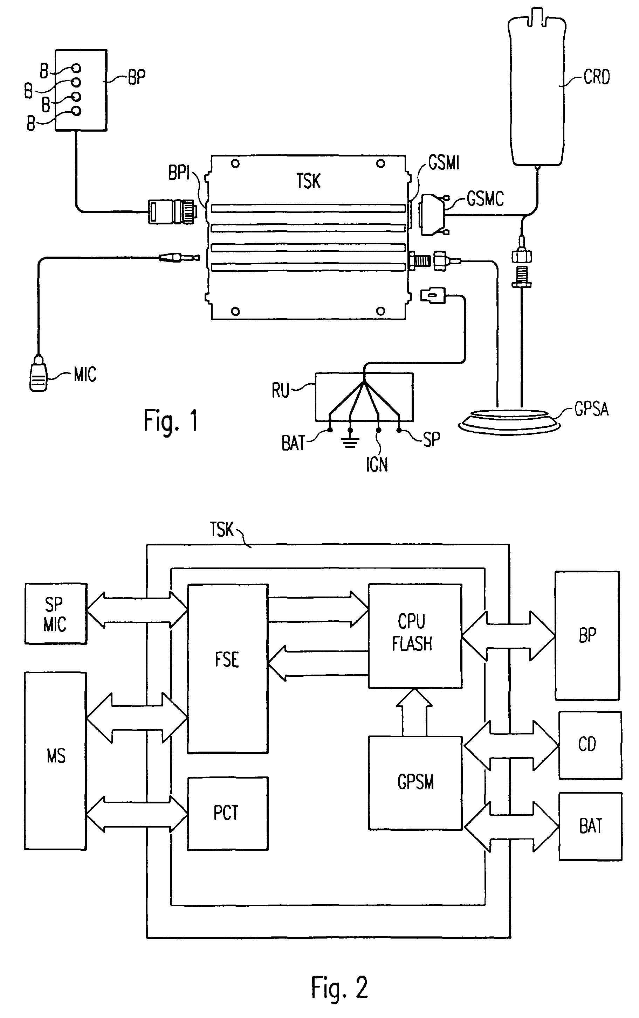

Die in Fig. 1 dargestellte Funkrufvorrichtung TSK (Telematics Starter Kit) ist über einen geräteinternen Telefonkabelanschluß GSMI mit einem Halteverbinder CRD zum Halten und elektrischen Verbinden eines Mobiltelefons verbindbar. Die Verbindungsleitung zwischen dem Halteverbinder CRD und dem Telefonkabelanschluß GSMI weist einen 26poligen Telefonkabelstecker GSMC auf. Der Telefonkabelstecker GSMC bzw. die gesamte Verbindungsleitung mit Steckverbindern wird beim Wechsel des Typs des in den Halteverbinder CRD einsetzbaren Mobiltelefons ausgewechselt bzw. es wird beim erstmaligen Anschluß eines Mobiltelefons auf die Auswahl des richtigen Telefonkabelsteckers GSMC geachtet. Der Telefonkabelstecker GSMC weist eine Mehrzahl von Polen auf, die nicht für die Leitungsverbindung zwischen der Funkrufvorrichtung TSK und dem Halteverbinder CRD benötigt werden. Entsprechend dem Typ des verwendeten Mobiltelefons sind bestimmte Pole des Telefonkabelsteckers GSMC elektrisch miteinander kurzgeschlossen, beispielsweise die Pins 3 und 5 sowie die Pins 23 und 26 für einen bestimmten Mobiltelefon-Typ.

Somit kann durch einfaches Auswechseln des Kabels samt Telefonkabelstecker GSMC die Funkrufvorrichtung TSK auf den Betrieb mit einem anderen Mobiltelefon umgestellt werden. Anstelle des Telefonkabelsteckers GSMC kann auch ein Adaptersteckverbinder verwendet werden, der die Kodierung enthält. In diesem Fall braucht nicht das gesamte Kabel ausgewechselt werden, es sei denn, der Halteverbinder-Steckverbinder des Kabels ist wegen der anderen Art von Steckverbindung an dem Halteverbinder CRD oder an dem Mobiltelefon auszuwechseln. In jedem Fall ist für die Umstellung auf ein anderes Mobiltelefon oder/und auf einen anderen Halteverbinder CRD nicht die Hilfe von Fachpersonal erforderlich. Der Nutzer kann dies vielmehr zu geringen Kosten selbst vornehmen. Die Erkennung des neuen Mobiltelefons erfolgt wiederum selbsttätig durch die Funkrufvorrichtung TSK, die dann das entsprechende Protokoll für die Übertragung von Funkrufsignalen an das Mobiltelefon verwendet bzw. die von diesem empfangenen Signale richtig interpretiert.

Wird die Funkrufvorrichtung TSK aktiviert, so fließt ein Strom über die miteinander kurzgeschlossenen Pole des Telefonkabelsteckers GSMC. Daraus ermittelt die Funkrufvorrichtung TSK den Gerätetyp bzw. bei mehreren Gerätetypen, die auf die gleiche Weise betrieben werden können, die Betriebsart der Mobiltelefone. Die Aktivierung wird dadurch ausgelöst, daß ein Mobiltelefon in den Halteverbinder CRD eingesetzt wird, wenn alle für ein Absetzen eines Funkrufs erforderlichen externen Geräte und Bauteile an die Funkrufvorrichtung TSK angeschlossen sind. Dies sind insbesondere ein Bedienteil BP zum Auslösen eines Funkrufs und eine GPS (Global Positioning System)-Antenne GPSA. Weitere externe Bauteile, die nicht unbedingt für die Absetzung eines Funkrufs, wohl aber für das Führen eines Telefongesprächs erforderlich sind, sind ein Freisprechmikrofon MIC und ein Radio RU.

Das Radio RU ist wiederum mit einer Lautsprechereinrichtung SP verbunden, die für die Freisprecheinrichtung genutzt wird. Die Freisprechsteuereinheit FSE befindet sich wie in Fig. 2 dargestellt in der Funkrufvorrichtung TSK. Weiterhin ist die Funkrufvorrichtung TSK über das Radio RU an die Batterie BAT bzw. die Lichtmaschine eines Kraftfahrzeugs angeschlossen, in dem die Funkrufvorrichtung TSK eingebaut ist. Zwischen der im vorliegenden Fall auf 12 Volt liegenden, vom Radio RU zur Funkrufvorrichtung TSK führenden Batterieleitung und einer ebenfalls vom Radio RU zur Funkrufvorrichtung TSK durchgeführten, auf Massepotential liegenden Leitung greift die Funkrufvorrichtung TSK eine Versorgungsspannung ab. Das Anliegen der Spannung an der Funkrufvorrichtung TSK kann je nach Ausführungsform abhängig oder unabhängig von dem Einschalten des Zündschalters des Kraftfahrzeugs sein. Um eine mißbräuchliche Nutzung der Funkrufvorrichtung und/oder der damit gekoppelten Freisprecheinrichtung zu verhindern, liegt vorzugsweise bei ausgeschaltetem Zündschalter keine Spannung an der Funkrufvorrichtung TSK an. Das Radio RU hat einen weiteren, mit IGN bezeichneten Eingangsanschluß, über den der Schaltzustand des Zündschalters erkennbar ist. Eine weitere Funktion der Leitungsverbindung zwischen der Funkrufvorrichtung TSK und dem Radio RU besteht darin, die Lautsprechereinrichtung SP während des Betriebs der Freisprecheinrichtung ausschließlich von der Freisprechsteuereinheit FSE anzusteuern und einen gleichzeitigen Signalfluß von Audiosignalen des Radios RU bzw. einer anderweitigen, mit dem Radio RU gekoppelten Audioeinrichtung zu verhindern.

Das Bedienteil BP weist vier Taster B auf. Einer der Taster B dient ausschließlich dem Ein- und Ausschalten der Freisprecheinrichtung. Ein zweiter Taster B dient der Auslösung eines Notrufs mit besonderer Dringlichkeit an eine Notrufzentrale. Zweck des Notrufs kann beispielsweise die Anforderung der Polizei, der Feuerwehr oder eines Rettungswagens sein. Im vorliegenden Fall wird zunächst versucht, eine Notrufzentrale zu erreichen, die in der Lage ist, über ein Mobilfunknetz gesendete Kurznachrichten (SMS) zu empfangen und auszuwerten. Durch längere Betätigung desselben, zweiten Tasters B, beispielsweise über einen längeren Zeitraum als 3 Sekunden, wird jedoch direkt eine Notrufzentrale angewählt, die öffentlich, für jedermann auch aus Festleitungs-Telefonnetzen erreichbar ist.

Wird versucht, eine SMS-Nachricht abzusetzen, wertet das in Fig. 2 dargestellte GPS-Modul GPSM die über die GPS-Antenne GPSA empfangenen Satellitensignale aus und bestimmt die örtliche Position des Kraftfahrzeugs. Die Auswertung kann auch laufend erfolgen, wobei die Auswertungsergebnisse gespeichert werden. Hierzu steht ein Flash-Speicher FLASH (Fig. 2) zur Verfügung, der mit einem Zentralprozessor CPU in Verbindung steht. Der Zentralprozessor CPU erzeugt ein Funkrufsignal, das an das im Halteverbinder CRD befindliche Mobiltelefon MS ausgegeben wird. Das Funkrufsignal enthält Informationen über die momentane örtliche Position des Kraftfahrzeugs, eine Identifizierungsnummer des Kraftfahrzeugs und/oder dessen Nutzer, die vom Mobiltelefon MS anzuwählende Rufnummer und die Dringlichkeitsstufe des Funkrufs. Die Identifizierungsnummer des Kraftfahrzeugs und/oder dessen Nutzers und die anzuwählende Rufnummer sind ebenfalls in dem Flash-Speicher FLASH gespeichert. Das Funkrufsignal wird an die Freisprechsteuereinheit FSE (Fig. 2) weitergeleitet und von dort über den Telefonkabelanschluß GSMI, den Telefonkabelstecker GSMC, die sich daran anschließende Leitungsverbindung und den Halteverbinder CRD an das Mobiltelefon MS übertragen.

Ist die Notrufzentrale, die in der Lage ist, SMS-Nachrichten zu empfangen, besetzt oder aus anderen Gründen nicht erreichbar, wird auch bei kürzerer Betätigung des zweiten Tasters B direkt die öffentlich für jedermann zugängliche Notrufzentrale angewählt. Hierzu erhält der Zentralprozessor CPU von dem Mobiltelefon MS und über die Freisprechsteuereinheit FSE ein Signal, aus dem der Zentralprozessor CPU erkennt, daß die SMS-fähige Notrufzentrale nicht erreichbar ist. Daraufhin liest der Zentralprozessor CPU aus dem Flash-Speicher die Rufnummer der öffentlich zugänglichen Notrufzentrale aus und sendet ein dementsprechendes Funkrufsignal an das Mobiltelefon MS.

Abhängig von dem Mobilfunknetz, für das das Mobiltelefon zugangsberechtigt ist, muß in der Regel von der Funkrufvorrichtung TSK die richtige Vorwahlnummer ausgewählt werden. Hierfür gibt es mehrere Möglichkeiten. Zum einen kann, abhängig von der Bauart des Mobiltelefons, die Vorwahlnummer abgefragt werden. Weiterhin ist es möglich, aus der Codierung oder einem Chip in dem Telefonkabelstecker GSMC die richtige Vorwahlnummer zu erkennen. Außerdem kann die Funkrufvorrichtung TSK nach ihrer Aktivierung versuchen, sich in verschiedene Mobilfunknetze über das Mobiltelefon MS einzuwählen. Dabei werden beispielsweise bekannte Service-Nummern der einzelnen Mobilfunknetze angewählt oder es wird lediglich versucht, die Vorwahlnummern zu wählen, und es wird die Antwort abgewartet. In letzterem Fall wertet der Zentralprozessor CPU das von dem Mobiltelefon MS an die Freisprechsteuereinheit FSE übermittelte Audio-Signal aus.

Ist das Mobilfunknetz, für das das Mobiltelefon MS zugangsberechtigt ist, nicht erreichbar, wird in vorgegebenen Zeitabständen versucht, die SMS-Nachricht erneut abzusetzen oder die öffentlich für jedermann zugängliche Notrufzentrale erneut anzuwählen. Die vorgegebenen Zeitabstände können für die verschiedenen Arten von Funkrufen, die über das Bedienteil BP auslösbar sind, unterschiedlich groß sein.

Durch Betätigen eines dritten Tasters B des Bedienteils BP wird ein Notruf mit geringerer Dringlichkeit ausgelöst. Der Notruf dient beispielsweise der Anforderung von Pannenhilfe für das Kraftfahrzeug. Er wird in analoger Weise wie vorstehend beschrieben erzeugt und als SMS-Nachricht abgesetzt.

Durch Betätigen eines vierten Tasters B des Bedienteils BP kann Information angefordert werden. Der entsprechende Informationsruf wird in analoger Weise, wie vorstehend beschrieben, die Notrufe als SMS-Nachricht abgesetzt.

Wird eine SMS-Nachricht erfolgreich abgesetzt, wertet die Notruf- bzw. Informationszentrale, bei der die SMS-Nachricht eingetroffen ist, die Nachricht aus, so daß schnellstmöglich wesentlich Vorinformationen über die örtliche Position des Kraftfahrzeugs, den Nutzer des Kraftfahrzeugs, den Zweck des Notrufs bzw. des Informationsrufs und/oder gegebenenfalls andere übermittelte Nachrichteninhalte vorliegen. Derartige weitere Informationen sind insbesondere Informationen über das bei der Übermittlung von Daten zwischen dem Mobiltelefon MS und der Funkrufvorrichtung TSK Datenformat bzw. Protokoll. Die Funkrufvorrichtung TSK kann daher durch eine Antwort der Notruf- bzw. Informationszentrale gezielt nicht nur mit Audiosignalen, sondern auch anderweitig angesprochen werden. So ist es beispielsweise möglich, durch eine Nachfrage der Zentrale weitere Informationen per SMS-Nachricht aus dem Flash-Speicher FLASH abzurufen. Es ist aber auch möglich, ein Telefongespräch mit dem Nutzer des Kraftfahrzeugs zu führen, das in der Art eines normalen Telefongesprächs über die Freisprecheinrichtung geführt wird.

Als Beispiel für die Information, die per Informationsruf angefordert wird, sei hier Information über die Verkehrslage oder über den Weg zu einem von dem Nutzer des Kraftfahrzeugs gewünschten Ziels genannt. Die Information kann auch von automatisch tätigen Geräten abgerufen werden. Weiterhin kann über die Funkrufvorrichtung ohne Zwischenschaltung menschlicher Verstandestätigkeit Information an ein Navigationssystem übermittelt werden, das in dem Kraftfahrzeug vorhanden ist. Das Bedienteil BP ist über ein Verbindungskabel und einen Verbindungsstecker mit einem Auslösesignalanschluß BPI der Funkrufvorrichtung TSK verbindbar. Weiterhin besteht eine Antennenverbindung zwischen dem Halteverbinder CRD und der GPS-Antenne GPSA, um diese für das Senden eines Funkrufs und für das Führen von per Funk übertragenen Telefongesprächen zu nutzen.

In Fig. 2 sind weitere, noch nicht beschriebene Details der Funkrufvorrichtung TSK und der daran anschließbaren externen Geräte und Bauteile dargestellt. Die Darstellung ist schematisch. Die Pfeile entsprechen daher nicht notwendig den in Fig. 1 dargestellten Kabeln bzw. Leitungsbündeln.

An die Funkrufvorrichtung TSK ist ein Stoßsensor CD anschließbar, der im Fall eines Unfalls, bei dem eine ungewöhnlich hohe Verzögerung oder Beschleunigung des Fahrzeugs auftritt, einen Notruf auslöst. Die Auslösung entspricht der Auslösung durch Betätigung eines der Taster B des Bedienteils BP.

Weiterhin ist eine externe Batterie BAC anschließbar oder in eine Batterie in sonstiger Weise mit der Funkrufvorrichtung TSK verbindbar, wobei es sich nicht um die zentrale Batterie des Kraftfahrzeugs handelt. Die Batterie BAT dient der Aufrechterhaltung eines Betriebes der Funkrufvorrichtung TSK beim Ausfall der Stromversorgung des Kraftfahrzeugs und/oder der Erhaltung von gespeicherten Daten in einem flüchtigen Datenspeicher der Funkrufvorrichtung TSK.

Schließlich ist noch eine Stromversorgungs-Steuereinheit PCT in der Funkrufvorrichtung TSK vorhanden. Die Steuereinheit PCT steuert die Aktivierung und Deaktivierung der Funkrufvorrichtung TSK in Abhängigkeit von dem Vorhandensein eines Mobiltelefons in dem Halteverbinder CRD wie vorstehend beschrieben. Im übrigen versetzt die Steuereinheit PCT nach Verstreichen eines Zeitraums vorgegebener Länge seit dem Abschalten des Zündschalters des Kraftfahrzeugs die Funkrufvorrichtung in den deaktivierten Zustand, auch wenn ein Mobiltelefon über den Halteverbinder CRD mit der Funkrufvorrichtung TSK verbunden ist. Beim Wiedereinschalten des Zündschalters versetzt die Steuereinheit PCT die Funkrufvorrichtung TSK wieder in den aktiven Zustand.

Mit der in Fig. 1 und Fig. 2 Funkrufvorrichtung TSK ist es auch möglich, während eines Telefongesprächs einen ersten und/oder weitere Funkrufe, insbesondere als SMS-Nachricht abzusetzen. Unabhängig von der gleichzeitigen Führung eines Telefongesprächs kann wiederholt die aktuelle örtliche Position des Kraftfahrzeugs durch wiederholte Funkrufe und/oder die in der Funkrufvorrichtung TSK gespeicherte Historie der örtlichen Position des Kraftfahrzeugs durch einen oder mehrere Funkrufe an einen Empfänger übermittelt werden. Der Empfänger kann somit feststellen, in welche Richtung und mit welcher Geschwindigkeit sich das Kraftfahrzeug bewegt.

Das beschriebene Verfahren zum Absetzen eines Funkrufs gehört zum Bereich der Telematik, d. h. der Kombination von Telekommunikation und Informationstechnik. Die beschriebene Funkrufvorrichtung TSK kann durch geringfügige Veränderung, z. B. durch Laden neuer Software, für weitere telematische Dienste wie die Anforderung und/oder der Empfang von Navigationsinformation für ein Navigationssystem des Kraftfahrzeugs, von technischer Information zur Behebung und/oder Diagnose einer Pannenursache und von sonstiger Information eingerichtet werden. Bei einer Weiterbildung der beschriebenen Funkrufvorrichtung TSK sind Steuerfunktionen bzw. Verarbeitungsfunktionen für einen oder mehrere solcher Dienste bereits in die Funkrufvorrichtung integriert. Peripheriegeräte wie Bildschirme, Displays und Navigationssystem-Geräte sind anschließbar. Auch können die empfangenen Informationen in der Funkrufvorrichtung zwischengespeichert werden, z. B. bis der Nutzer Zeit hat, die Informationen auszuwerten bzw. das Auswertungsergebnis zu beachten. Auch können die Informationen in der Funkrufvorrichtung in Sprache, d. h. Sprachsignale, umgewandelt werden und über die Lautsprechereinrichtung ausgegeben werden. Der Fahrer eines Kraftfahrzeugs hört dann beispielsweise die Empfehlung, an der nächsten Ampelkreuzung links abzubiegen. Er wird dann durch einen in der Servicezentrale sitzenden Lotsen an sein Fahrziel geleitet.

Alle in der Beschreibung offenbarten Merkmale der Funkrufvorrichtung und des Verfahrens zum Absetzen eines Funkrufs werden einzeln und in beliebiger Kombination als erfindungswesentlich beansprucht. So ist beispielsweise auch eine Funkrufvorrichtung ohne Erkennungseinheit zum Erkennen des Erkennungssignals bezüglich des Typs und/oder der Betriebsart der Funkruf-Sendeeinheit erfindungswesentlich offenbart.

### Bezugszeichenliste

- B: Taster
- BAT: Batterie
- BP: Bedienteil
- BPI: Auslösesignalanschluß
- CD: Stoßsensor
- CPU: Zentralprozessor
- CRD: Halteverbinder
- FSE: Freisprechsteuereinheit
- FLASH: Flash-Speicher
- GPSA: GPS-Antenne
- GPSM: GPS-Modul
- GSMC: Telefonkabelstecker
- GSMI: Telefonkabelanschluß
- IGN: Zündschalteranschluß
- MIC: Mikrofon
- MS: Mobiltelefon
- PCT: Stromversorgungs-Steuereinheit
- RU: Radio
- SP: Lautsprechereinrichtung
- TSK: Funkrufvorrichtung

## Patentansprüche

1. Funkrufvorrichtung (TSK) zum Absetzen eines Funkrufs, insbesondere zum Absetzen eines Notrufs und/oder einer Informationsanforderung, wobei die Funkrufvorrichtung (TSK) folgendes aufweist:
- eine Positionsbestimmungseinheit (GPSM) zur Bestimmung der örtlichen Position der Funkrufvorrichtung (TSK) bzw. einer mit dieser verbundenen Vorrichtung, insbesondere eines Kraftfahrzeug,
- einen Auslösesignalanschluß (BPI) zur Zuführung eines Auslösesignals, durch dessen Eintreffen und/oder bei dessen Ausbleiben das Absetzen des Funkrufs ausgelöst wird,
- einen Erkennungsanschluß (GSMI) zur Zuführung eines Erkennungssignals, aus dem der Typ und/oder die Betriebsart einer an die Funkrufvorrichtung (TSK) anschließbaren Funkruf-Sendeeinheit (MS) erkennbar ist,
- einen Funkrufausgang (GSMI) zum Ausgeben eines Funkrufsignals an die Funkruf-Sendeeinheit (MS), so daß diese einen dem Funkrufsignal entsprechenden Funkruf sendet, und
- eine Erkennungseinheit, die entsprechend dem über dem Erkennungsanschluß (GSMI) zugeführten Erkennungssignal eine Anpassung des Funkrufsignals an den Typ der Funkruf-Sendeeinheit (MS) und/oder an dessen Betriebsart steuert.

2. Funkrufvorrichtung nach Anspruch 1,
wobei der Erkennungsanschluß und der Funkrufausgang durch eine gemeinsame gerätetechnische Anschlußeinheit (GSMI) gebildet sind, insbesondere durch einen mehrpoligen Steckverbinder.

3. Funkrufvorrichtung nach Anspruch 1 oder 2,
wobei die Funkrufvorrichtung (TSK) eine Abtrageeinheit zum Abfragen einer vorrichtungsexternen Information aufweist, die in Form des Erkennungssignals der Erkennungseinheit zugeführt wird.

4. Funkrufvorrichtung nach einem der Ansprüche 1 bis 3,
wobei ein in die Funkrufvorrichtung (TSK) einsteckbarer Steckverbinder eine Codierung aufweist, aus der der Typ und/oder die Betriebsart der Funkruf-Sendeeinheit (MS) erkennbar ist.

5. Funkrufvorrichtung nach einem der Ansprüche 1 bis 4,
mit einer Freisprechsteuereinheit (FSE) zum Steuern einer Freisprecheinrichtung, die mit der Funkruf-Sendeeinheit (MS) koppelbar ist.

6. Funkrufvorrichtung nach Anspruch 5,
wobei die Freisprechsteuereinheit (FSE), die Positionsbestimmungseinheit (GPSM) und die Erkennungseinheit (CPU) von derselben Trägereinrichtung, insbesondere Platine, getragen werden und über an der Trägereinheit angebrachte Leitungsverbindungen elektrisch miteinander verbunden sind.

7. Funkrufvorrichtung nach Anspruch 5 oder 6,
wobei die Freisprechsteuereinheit (FSE) das Funkrufsignal über den Funkrufausgang (GSMI) ausgibt.

8. Funkrufvorrichtung nach einem der Ansprüche 1 bis 7,
mit einem an dem Auslösesignalanschluß (BPI) anschließbaren Bedienteil (BP), das der Auslösung eines oder mehrerer Funkrufe und insbesondere dem Starten und/oder Beenden eines über die Freisprecheinrichtung nach einem der Ansprüche 5 bis 7 geführten Gesprächs dient.

9. Funkrufvorrichtung nach einem der Ansprüche 1 bis 8,
wobei die Positionsbestimmungseinheit ausgebildet ist, GPS-Signale über eine GPS-Antenneneinrichtung (GPSA) zu empfangen.

10. Funkrufvorrichtung nach Anspruch 9,
wobei die GPS-Antenneneinrichtung (GPSA) auch als Antenneneinrichtung zum Senden des Funkrufs dient und gegebenenfalls zum Empfangen von Funksignalen dient, die in der Funkruf-Sendeeinheit (MS) verarbeitet werden.

11. Verfahren zum Absetzen eines Funkrufs, insbesondere zum Absetzen eines Notrufs und/oder einer Informationsanforderung, wobei eine Funkrufvorrichtung (TSK) zum Absetzen des Funkrufs mit einer Funkruf-Sendeeinheit (MS), insbesondere einem Mobiltelefon, verbindbar ist, um den Funkruf über die Funkruf-Sendeeinheit (MS) abzusetzen, wobei das von der Funkrufvorrichtung (TSK) an die Funkruf-Sendeeinheit (MS) zu übermittelnde, das Senden des Funkrufs bewirkende Funkrufsignal abhängig von dem Typ der Funkruf-Sendeeinheit (MS) und/oder abhängig von dessen Betriebsart ist und wobei der Typ und/oder die Betriebsart aus einem Erkennungssignal erkannt werden, das der Funkrufvorrichtung (TSK) zugeführt wird.

12. Verfahren nach Anspruch 11,
wobei die Funkrufvorrichtung (TSK) das Erkennungssignal abfragt.

13. Verfahren nach Anspruch 11 oder 12,
wobei die Information über die Betriebsart und/oder den Typ der Funkruf-Sendeeinheit (MS) in Verbindungsmitteln zum signaltechnischen Verbinden der Funkrufvorrichtung (TSK) mit der Funkruf-Sendeeinheit (MS) codiert wird.

14. Verfahren nach einem der Ansprüche 11 bis 13,
wobei die Funkrufvorrichtung (TSK) eine Freisprechsteuereinheit (FSE) beinhaltet zum Steuern einer Freisprecheinrichtung, die mit der Funkruf-Sendeeinheit (MS) koppelbar ist oder deren Bestandteil die Freisprechsteuereinheit (FSE) ist, und wobei die Aktivierung des Freisprechsystems automatisch durch das signaltechnische Verbinden der Funkruf-Sendeeinheit (MS) mit der Funkrufvorrichtung (TSK) ausgelöst wird.

15. Verfahren nach einem der Ansprüche 11 bis 14,
wobei die Aktivierung der Funkrufvorrichtung (TSK) automatisch durch das signaltechnische Verbinden der Funkruf-Sendeeinheit (MS) mit der Funkrufvorrichtung (TSK) ausgelöst wird.

16. Verfahren nach einem der Ansprüche 11 bis 15, wobei der Funkruf einen vorher zwischen der Funkrufvorrichtung (TSK) und einem Empfänger vereinbarten Bedeutungsgehalt hat.
